Europäisches Patentamt

European Patent Office

Office européen des brevets

(11) Veröffentlichungsnummer: **0 267 399 B1**

# EUROPÄISCHE PATENTSCHRIFT

(45) Veröffentlichungstag der Patentschrift: **24.04.91**

(51) Int. Cl.5: **B23F 1/02**, B23F 15/00

(21) Anmeldenummer: 87114024.0

(22) Anmeldetag: 25.09.87

(54) **Verfahren zum Herstellen von Zahnstangenlenkungen mit veränderlicher Übersetzung.**

(30) Priorität: **10.11.86 DE 3638346**

(43) Veröffentlichungstag der Anmeldung:
**18.05.88 Patentblatt 88/20**

(45) Bekanntmachung des Hinweises auf die
Patenterteilung:
**24.04.91 Patentblatt 91/17**

(84) Benannte Vertragsstaaten:
**DE ES FR GB IT SE**

(56) Entgegenhaltungen:
**DE-A- 2 811 616        DE-B- 1 100 427**
**DE-C- 747 611          GB-A- 145 453**
**US-A- 2 053 597        US-A- 2 348 281**
**US-A- 2 397 356        US-A- 3 267 763**

**PATENT ABSTRACTS OF JAPAN, Band 9, Nr.**
**206 (M-406)[1929], 23. August 1985; JP-A-60**
**67 023 (NISSAN JIDOSHA K.K.) 17.04.1985**

(73) Patentinhaber: **FORD-WERKE AKTIENGESELL-**
**SCHAFT**
**Werk Köln-Niehl Henry-Ford-Strasse Post-**
**fach 60 40 02**
**W-5000 Köln 60(DE)DE ES IT SE**

Patentinhaber: **FORD MOTOR COMPANY LI-**
**MITED**
**Eagle Way**
**Brentwood Essex CM13 3BW(GB)GB**

Patentinhaber: **FORD FRANCE SOCIETE ANO-**
**NYME**
**344 Avenue Napoléon Bonaparte B.P. 307**
**F-92506 Rueil Malmaison Cedex(FR)FR**

(72) Erfinder: **Mitzenheim, Theo**
**Gartenfeld 61**
**W-5632 Wermelskirchen(DE)**

(74) Vertreter: **Messulam, Alec Moses et al**
**A. Messulam & Co. 24 Broadway**
**Leigh on Sea Essex SS9 1BN(GB)**

**Beschreibung**

Die Erfindung bezieht sich auf ein Verfahren zur Herstellung der Schrägverzahnung an Lenkzahnstangen von Zahnstangenlenkungen mit unterschiedlicher Übersetzung, der im Oberbegriff des Patentanspruches 1 erläuterten Art.

Aus der US-A-3,267,763 ist eine Zahnstangenlenkung mit veränderlicher Übersetzung bekannt, bei der ein gleichförmig verzahntes Ritzel und eine ungleichförmig verzahnte Zahnstange hergestellt wird, wobei die Teilung der gleichförmigen Verzahnung eines Mittelteiles der Zahnstange gegenüber der Teilung der ungleichförmigen Verzahnung in Außenteilen der Zahnstange unterschiedlich ist um in Geradeausstellung eine direkte und in Einschlagstellung eine indirekte Lenkübersetzung zu erzielen und wobei die Übergangsbereiche zwischen den unterschiedlichen Verzahnungsabschnitten in Teilung und Zahnform modifiziert sind.

Aus Spalte 1, Abs. 5, der oben erwähnten Patentschrift ist der Hinweis zu entnehmen, daß die Herstellung einer solchen Zahnstange durch eine entsprechende Modifizierung einer Zahnradschneidmaschine, durch Kaltschmieden oder einem anderen nicht spanabhebenden Verfahren oder durch Räumen erfolgen kann. Man geht dabei davon aus, daß lediglich eine Modifizierung der benachbarten unterschiedlichen Zahnformen erforderlich ist.

Aus der DE-A-28 11 616 ist ein Verfahren zur Herstellung von Zahnstangenlenkungen mit veränderlicher Übersetzung durch Räumen bekannt.

An einer Räummaschine ist ein verschiedene Gruppen von Räumwerkzeugen tragender Räumwerkzeugträger vorgesehen, der sich quer zu einem Zahnstangen-Rohling bewegen kann, wobei der Zahnstangen-Rohling in einem Werkstückträger derart aufgenommen ist, daß er gegenüber der Bewegungsrichtung des Werkzeugträgers zwischen aufeinanderfolgenden Räumschritten in seiner Winkellage verändert werden kann.

Dieses bekannte Verfahren zur Herstellung von Zahnstangen dieser Art ist von der Maschinenseite äußerst aufwendig, da eine solche Räummaschine einen hohen Bauaufwand und einen großen Platzbedarf erfordert und darüber hinaus ist es auch von der Werkzeugseite her sehr teuer, da eine Vielzahl von unterschiedlichen Räumwerkzeugen erforderlich sind, deren Nacharbeitung bei Verschleiß verhältnismäßig teuer ist.

Die Aufgabe der Erfindung ist es, ein Verfahren der im Oberbegriff des Patentanspruches 1 erläuterten Art derart zu verbessern, daß die Herstellung der Übergangsbereiche solcher Zahnstangen mit einem geringeren maschinellen Aufwand und mit geringerem werkzeugmäßigen Einsatz in äußerst kostengünstiger Weise möglich ist.

Gemäß der Erfindung wird diese Aufgabe gelöst, indem bei einem Verfahren der im Oberbegriff des Patentanspruches erläuterten Art die im Kennzeichenteil des Patenanspruches aufgezeigten Verfahrensschritte ausgeführt werden.

Aus der US-A-2,348,281 ist es grundsätzlich bekannt zur Herstellung von Zahnstangen mit Schrägverzahnung die Zahnlücken dieser Zahnstangen durch Formschleifen herzustellen.

Aus Patent Abstracts of Japan, Band 9, Nr. 206 (M-406) (1929), 23. August 1985; JP-A-60 67 023 (Nissan Jidosha K.K.) 17.04.1985 ist ein Hinweis darauf zu entnehmen, daß bei einer Räummaschine zum Herstellen von Zahnstangen mit Schrägverzahnung und veränderlicher Übersetzung der den Zahnstangen-Rohling tragende Werkzeugträger in entsprechenden Winkellagen gegenüber dem die geradlinige Räumbewegung ausführenden Räumkopf einstellbar sein muß.

Dadurch, daß nach dem Herstellen der mittleren und der beiden äußeren Verzahnungsabschnitte die Übergangsverzahnungsabschnitte durch aufeinanderfolgendes, aufgefächertes Formschleifen, ausgehend von Schnittpunkten der Schrägungswinkel der jeweils benachbarten Zahnlücken des mittleren und des zugehörigen äußeren Verzahnungsabschnittes hergestellt werden, kann eine solche Zahnstange bei stationärer Anordnung des Zahnstangen-Rohlings auf eine einen verhältnismäßig geringen Platzbedarf erfordernden Formschleifmaschine mit der heute üblichen variablen Steuerungsmöglichkeit im Bewegungsablauf und bei Einsatz von mit verhältnismäßig gerinKostenaufwand erstellbaren Formschleifscheiben, deren Profilierung und Abrichten einfach ist, äußerst kostengünstig gefertigt werden.

Dadurch, daß die sich beiderseits des mittleren Verzahnungsabschnittes anschließenden Übergangszahnlücken paarweise parallel verlaufen, können sie in einer Ausrichtung der Formschleifmaschine mittels eines zwei Schleifscheiben aufweisenden Schleifkopfes paarweise bearbeitet werden.

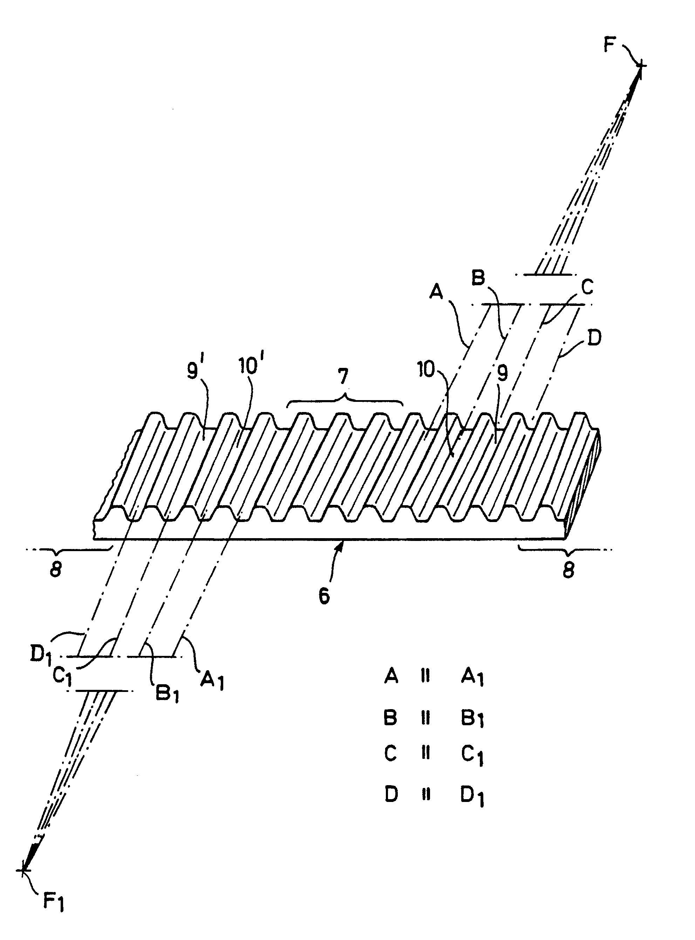

Die Erfindung wird anhand eines in der Zeichnung gezeigten schematischen Ausführungsbeispieles näher erläutert.

Die Figur zeigt eine Schrägrißansicht auf eine Zahnstange mit den unterschiedlichen Verzahnungsabschnitten und dem schematisch angedeuteten erfindungsgemäßen Verfahrensschritt zur Herstellung der Übergangsverzahnungabschnitte.

Die in der Figur in Draufsicht gezeigte Zahnstange 6 weist einen mittleren Verzahnungsabschnitt 7 von gleichformiger Zahnteilung und Zahnform auf, an den sich in einem bestimmten Abstand äusere, gleichförmige Verzahnungsabschnitte 8 anschließen.

Der Übergangsbereich zwischen den beiden Verzahnungsabschnitten 7 und 8 wird durch Formschleifen von Übergangszahnlücken hergestellt, wobei der Winkelbereich, der sich aus den Schrägungswinkeln (Strahl A) des mittleren Verzahnungsabschnittes 7 und den Schrägungswinkel (Strahl D) des äußeren Verzahnungsabschnittes ergibt, ausgehend von dem Schnittpunkt F in eine angepaßte Zahl von Zahnlücken (Strahlen B und C) aufgeteilt wird, die mit einer ein entsprechendes Profil aufweisenden Schleifscheibe durch Formschleifen aus dem Zahnstangenrohling herausgearbeitet wird.

Wie sich aus der Gegenüberstellung der winkelmäßigen Auffächerung der Übergangszahnlücken am Übergangsbereich rechts vom mittleren Verzahnungsabschnitt 7 und am Übergangsbereich links vom mittleren Verzahnungsabschnitt 7 ergibt, ergeben sich hierbei in zweckmäßiger Weise jeweils parallel zueinander liegende Strahlen B und $B_1$ und C und $C_1$, so daß ein zwei Schleifscheiben aufweisender Schleifkopf einer Formschleifmaschine die einander entsprechenden Zahnlücken 9 und $9^1$ bzw. 10 und $10^1$ in einem Arbeitsgang bearbeiten kann.

Die für dieses Herstellungsverfahren erforderlichen Formschleifmaschinen, die entsprechende Winkel- und Profilkorrekturen ausführen können, sind heute durch CNC-gesteuerte Schleifmaschinen vorhanden.

Selbstverständlich können in vorteilhafter Weise der gleichförmige mittlere Verzahnungsabschnitt und die gleichförmigen äußeren Verzahnungsabschnitte durch entsprechend breite, eine Vielfach-Profilierung aufweisende Schleifscheiben in einem Zuge durch Formschleifen hergestellt werden.

## Ansprüche

1. Verfahren zur Herstellung der Schrägverzahnung an Lenkzahnstangen von Zahnstangenlenkungen mit unterschiedlicher Übersetzung, mit einem mittleren gleichförmig verzahnten Verzahnungsabschnitt, zwei beidseits von diesen im Abstand ausgebildeten äußeren gleichförmig verzahnten Verzahnungsabschnitten und mit zwischen dem mittleren und den beiden äußeren Verzahnungsabschnitten ausgebildeten Übergangsverzahnungsabschnitten mit in Form und Teilung modifizierter Verzahnung, bei dem der mittlere und die beiden äußeren Verzahnungsabschnitte nach einem beliebigen für das Verzahnen von Lenkzahnstangen üblichen Verzahnungsverfahren hergestellt werden,
**dadurch gekennzeichnet,** daß
nach Herstellung der mittleren und der beiden äußeren Verzahnungsabschnitte (7 bzw. 8) die Übergangsverzahnungsabschnitte (9, 10 und 9', 10') durch aufeinanderfolgendes, aufgefächertes Formschleifen, ausgehend von Schnittpunkten (F und F1) der Schrägungswinkel der jeweils benachbarten Zahnlücken des mittleren und des zugehörigen äußeren Verzahnungsabschnittes (7 und 8) paarweise in einem Arbeitsgang mit einem zwei Schleifscheiben aufweisenden Schleifkopf hergestellt werden.

## Claims

1. Method of producing the helical teeth on steering racks of rack steering mechanisms with different transmission ratios, with a central toothed portion having uniform teeth, two outer toothed portions which are spaced on either side of it and have uniform teeth and with transitional toothed portions formed between the central toothed portion and the two outer toothed portions and having teeth which are modified in shape and pitch, in which the central toothed portion and the two outer toothed portions are produced according to an optional toothing process conventional for the toothing of steering racks, characterised in that, after producing the central toothed portion (7) and the two outer toothed portions (8), the transitional toothed portions (9, 10 and 9', 10') are produced in pairs in one operation with a grinding head having two grinding discs by successive fanned-out form grinding starting from points of intersection (F and F1) of the angle of skew of the respectively adjacent tooth gaps of the central toothed portion (7) and the associated outer toothed portion (8).

## Revendications

1. procédé de façonnage de la denture hélicoïdale sur des crémaillères de direction de mécanismes de direction à crémaillères à démultiplications différentes, comprenant une zone dentée centrale à denture régulière, deux zones dentées extérieures à denture régulière, ménagèes de part et d'autre à distance de cette dernière, et des zones dentées de transition, ménagées entre la zone dentée centrale et les deux zones dentées extérieures, et munies d'une denture dont la forme et le pas sont modifiés, procédé dans lequel la zone dentée centrale et les deux zones dentées extérieures sont produites selon n'importe quel procédé de taillage classique pour façonner une denture sur des crémaillères,
caractérisé par le fait que,

après le façonnage de la zone dentée centrale et des deux zones dentées extérieures (7, respectivement 8), les zones dentées de transition (9, 10 et 9', 10') sont ménagées par paires en une passe de travail, avec une tête de meulage présentant deux disques de meulage, par rectification par meule de forme successive et progressant en éventail, à partir de points d'entaillage (F et F1) des angles d'inclinaison des entredents respectivement contigus de la zone dentée centrale, et de la zone dentée extérieure associée (7 et 8).

A ‖ $A_1$

B ‖ $B_1$

C ‖ $C_1$

D ‖ $D_1$